# EUROPEAN PATENT APPLICATION

(11) **EP 4 821 663 A1**
(43) Date of publication of application: **14.10.2026**
(21) Application number: 24899873.4
(22) Date of filing: 04.12.2024
(51) Int. Cl.: B29C 67/00

(54) **SEALING PROCESS FOR WELL PLATE, HIGH-THROUGHPUT SCREENING METHOD, WELL PLATE HEAT SEALING DEVICE, AND HIGH-THROUGHPUT SCREENING SYSTEM**

(30) Priority: 08.12.2023 CN 202323359688 U; 08.12.2023 CN 202311688809
(71) Applicant: Chemlex Technology Co., Ltd., Shanghai 200120 (CN)
(72) Inventor: MO, Yiming, Hangzhou, Zhejiang 311200 (CN); CHEN, Jie, Hangzhou, Zhejiang 311200 (CN); WANG, Peng, Shanghai 200120 (CN); QU, Wei, Hangzhou, Zhejiang 311200 (CN); LIN, Sen, Shanghai 200120 (CN)
(74) Representative: Range, Christopher William
(86) International application number: PCT/CN2024/136857
(87) International publication number: WO 2025/119235

(57) **Abstract**

The present application relates to the technical field of high-throughput chemical reactions, and in particular to a sealing process for a well plate, a high-throughput screening method, a well plate heat-sealing device, and a high-throughput screening system. The sealing process for a well plate comprises: covering a layer of film above blind wells of a well plate and then performing heat sealing, wherein the material for forming the film is consistent with the material of the part of the well plate in contact with the film, and the heat-sealing conditions comprise: the heat-sealing temperature is 5-65 °C higher than the melting point of the material of the film, and the heat-sealing duration is 0.3-4.5 s. The sealing process can solve problems that sealing of a single well with a small volume in an existing well plate is difficult and a temperature tolerance of an existing well plate sealing process is low. Thus, a well plate reaction device is allowed to expand its applicable ranges of reaction temperatures and reaction solvents in high-throughput screening, implementing heating and oscillating reactions, and also implementing chemical reactions under conditions exceeding the boiling points of solvents.

## Description

### CROSS-REFERENCE TO RELATED APPLICATIONS

The present invention claims priority to Chinese Patent Application No. 2023116888093, filed with the China National Intellectual Property Administration on December 8, 2023, and entitled "SEALING PROCESS FOR WELL PLATE AND HIGH-THROUGHPUT SCREENING METHOD THEREFOR", and Chinese Patent Application No. 2023233596886, filed with the China National Intellectual Property Administration on December 8, 2023, and entitled "WELL PLATE HEAT SEALING DEVICE AND HIGH-THROUGHPUT SCREENING SYSTEM", which are incorporated herein by reference in their entirety.

### TECHNICAL FIELD

The present invention belongs to the technical field of high-throughput chemical reactions, and particularly relates to a well plate sealing process, a high-throughput screening method, a well plate heat-sealing device, and a high-throughput screening system.

### BACKGROUND ART

Multi-well plates are widely used in the biological and biochemical fields, for example, for studies of proteins, peptides, and enzymes at room temperature or under conditions of 37 °C. Multi-well plates are less frequently used for organic chemical reactions since organic chemical reactions involve a wide variety of solvents that are strongly corrosive and have broad reaction temperature ranges. Therefore, glassware is generally used as the reaction vessel. Well plate reactors are important reaction devices in high-throughput screening, such as a plastic 48-well plate, a 96-well plate, and a 384-well plate. The heat-sealing process of a well plate refers to covering a film above blind wells of the well plate, heating the film, and applying a certain pressure to the film, thereby sealing a reaction solution or a solid within the blind wells of the well plate. At present, various well plate heat-sealing devices have been developed that use aluminum foil or polypropylene film as a heat-sealing film to achieve well plate heat sealing. However, the sealing of a single well with a small volume in an existing well plate is difficult.

### SUMMARY

Embodiments of the present invention provide a well plate sealing process, a high-throughput screening method, a well plate heat-sealing device, and a high-throughput screening system. The sealing process provided in an embodiment of the present invention can solve the problems that sealing of a single well with a small volume in an existing well plate is difficult and a temperature tolerance of an existing sealing process is low. Thus, the problems in well plate-based high-throughput screening methods are solved, in which the reaction temperature and reaction solvent are limited, reactions cannot be performed at a temperature higher than a boiling point of a solvent, and heating and oscillation reaction conditions cannot be achieved. The well plate heat-sealing device provided in an embodiment of the present invention can realize a high-temperature and rapid heat-sealing process (<5 s), ensure that the temperature of a liquid or a solid in the blind wells of the well plate is always lower than 30 °C during the heat-sealing process, improve the mechanical strength of the heat-sealed portion of the well plate, and ensure that the seal does not fail in use scenarios such as heating and/or oscillation.

In a first aspect, an embodiment of the present invention provides a well plate sealing process, which includes: covering a layer of film above blind wells of the well plate and then performing heat sealing, where a material forming the film is identical to a material of a portion of the well plate in contact with the film, and heat-sealing conditions include: a heat-sealing temperature of 5-65 °C higher than a melting point of the material of the film, and a heat-sealing duration of 0.3-4.5 s.

It should be noted that the above well plate can be a commercially available multi-well plate, such as a 24-well plate, a 48-well plate, a 96-well plate, or a 384-well plate, or can be a blister well plate provided in an embodiment of the present invention.

Optionally, the heat-sealing temperature is 10-55 °C higher than the melting point of the material of the film, preferably 10-50 °C higher than the melting point of the material of the film.

Optionally, the heat-sealing duration is 0.5-4 s, more preferably 0.5-3 s, and further preferably 0.5-1 s or 1-3 s.

Optionally, the material forming the film is a thermoplastic material.

Optionally, the thermoplastic material is selected from any one of polyolefin materials, polyester materials, polyamide materials, or polyurethane materials, or a composite material formed from a combination of at least two thereof.

Optionally, the thermoplastic material is selected from any one of polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, or polychlorotrifluoroethylene, or a composite material formed from a combination of at least two thereof.

Optionally, a thickness of the film is 0.04-0.18 mm, preferably 0.04-0.15 mm, and more preferably 0.04-0.1 mm.

Optionally, the film is a PP film, and a thickness of the PP film is 0.04-0.18 mm, preferably 0.04-0.15 mm, and more preferably 0.04-0.1 mm.

A heat-sealing temperature is 170-215 °C, preferably 180-210 °C; and a heat-sealing duration is 0.5-4.5 s, more preferably 0.5-3 s, and further preferably 1-3 s.

Optionally, the film is an FEP film, and a thickness of the FEP film is 0.04-0.18 mm, preferably 0.04-0.15 mm, and more preferably 0.04-0.1 mm.

A heat-sealing temperature is 250-350 °C, preferably 280-300 °C; and a heat-sealing duration is 0.3-4.5 s, more preferably 0.5-3 s, and further preferably 0.5-1 s.

In a second aspect, an embodiment of the present invention provides a high-throughput screening method, which includes the well plate sealing process according to any one of the foregoing embodiments.

Optionally, the well plate includes a blister well plate.

Optionally, a cross-sectional shape of a blind well of the blister well plate is one selected from a circular shape, a quasi-circular shape, an elliptical shape, and a quasi-elliptical shape, preferably a circular shape.

Optionally, an entire shape of the blind well of the blister well plate is one selected from a quasi-hemispherical shape and a quasi-semi-ellipsoidal shape, preferably a quasi-hemispherical shape.

Optionally, the high-throughput screening method further includes: forming the blister well plate by performing a forming process on a thermoplastic material.

Optionally, the high-throughput screening method includes: forming the blister well plate by performing a thermoforming process on the thermoplastic material.

Optionally, the forming process includes any one of a blow molding process, a vacuum forming process, and an injection molding process.

Optionally, forming the blister well plate includes: heating a thermoplastic material having a thickness of 0.15-0.8 mm to a temperature 5-30 °C lower than a melting point of the thermoplastic material, and processing a thermoplastic material substrate into a mold shape by using a blow molding process or a vacuum forming process, so as to form the blister well plate.

Optionally, the heating temperature is 5-25 °C lower than the melting point of the thermoplastic material, preferably 5-20 °C lower than the melting point of the thermoplastic material.

Alternatively, forming the blister well plate includes: heating a thermoplastic material to a molten state, and then processing a thermoplastic material substrate into a mold shape by using an injection molding process, so as to form the blister well plate having a thickness of 0.15-0.8 mm.

Optionally, a thickness of the thermoplastic material is 0.2-0.6 mm.

Optionally, forming the blister well plate includes: heating a thermoplastic material having a thickness of 0.15-0.8 mm to a temperature 5-30 °C lower than a melting point of the thermoplastic material, maintaining the temperature for 50-100 s, then rapidly conveying the thermoplastic material to above a mold, and vacuum-forming the thermoplastic material in a vacuum environment to form the blister well plate.

Optionally, the thickness of the thermoplastic material is 0.2-0.6 mm.

Optionally, the heating temperature is 5-25 °C lower than the melting point of the thermoplastic material, preferably 5-20 °C lower than the melting point of the thermoplastic material.

Optionally, the heating temperature is maintained for 70-90 s.

Optionally, forming the blister well plate includes: placing a thermoplastic material having a thickness of 0.15-0.8 mm above a mold, heating the thermoplastic material to a temperature 5-30 °C lower than a melting point of the thermoplastic material, and blow-molding the thermoplastic material under a certain pressure to form the blister well plate.

Optionally, the thickness of the thermoplastic material is 0.2-0.6 mm.

Optionally, the heating temperature is 5-25 °C lower than the melting point of the thermoplastic material, preferably 5-20 °C lower than the melting point of the thermoplastic material.

Optionally, the thermoplastic material is selected from any one of polyolefin materials, polyester materials, polyamide materials, or polyurethane materials, or a composite material formed from a combination of at least two thereof.

Optionally, the thermoplastic material is selected from any one of polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, and polychlorotrifluoroethylene, or a composite material formed from a combination of at least two thereof.

Optionally, the thermoplastic material is a PP material, and the forming process includes: heating the PP material to 130-165 °C, maintaining the temperature for 50-100 s, and vacuum-forming the PP material in a vacuum environment, where a thickness of the PP material is 0.15-0.8 mm.

Optionally, the thickness of the PP material is 0.2-0.6 mm; optionally, the heating temperature is 150-155 °C; optionally, the heating temperature is maintained for 70-90 s.

Alternatively, the forming process includes: heating the PP material to 130-165 °C, and blow-molding the PP material under a pressure not less than 0.4 MPa, where a thickness of the PP material is 0.15-0.8 mm.

Optionally, the thickness of the PP material is 0.2-0.6 mm; and optionally, the heating temperature is 140-150 °C.

Optionally, the thermoplastic material is an FEP material, and the forming process includes: heating the FEP material to 220-260 °C, maintaining the temperature for 50-100 s, and vacuum-forming the FEP material in a vacuum environment, where a thickness of the FEP material is 0.15-0.8 mm; optionally, the thickness of the FEP material is 0.2-0.6 mm; optionally, the heating temperature is 240-250 °C; optionally, the heating temperature is maintained for 70-90 s.

Alternatively, the forming process includes: heating the FEP material to 220-260 °C, and blow-molding the FEP material under a pressure not less than 0.4 MPa, where a thickness of the FEP material is 0.15-0.8 mm; optionally, the thickness of the FEP material is 0.2-0.6 mm; and optionally, the heating temperature is 240-250 °C.

Optionally, the high-throughput screening method includes: adding a reaction solution and/or a solid into a blind well of the blister well plate after forming the blister well plate, sealing according to the well plate sealing process, then performing heating and/or oscillation, and subsequently analyzing a reaction system.

Optionally, in a sealing process, a sealing ring is formed at an opening of each blind well of the blister well plate; optionally, a shape of the sealing ring is identical to a shape of the blind well of the blister well plate; optionally, a space for forming the sealing ring is arranged between two adjacent blind wells; and optionally, an inner contour of the sealing ring covers an outer contour of the blind well or is flush with an outer contour of the blind well.

Optionally, a device for performing heating and/or oscillation is provided with a boss, and when a heating temperature is higher than a boiling point of a solvent, the boss contacts a sealed blister well plate to perform secondary reinforced sealing on the blind well of the blister well plate; and a diameter of the boss is between an outer diameter and an inner diameter of a sealing ring at an opening of the blind well of the blister well plate.

In a third aspect, an embodiment of the present invention provides a well plate heat-sealing device, which includes a support, a transfer plate, and a heating component, where the transfer plate and the heating component are both connected to the support, and the transfer plate and the heating component selectively contact; and

the heating component includes a hot-pressing head mounting plate and at least one hot-pressing head, each hot-pressing head has an annular structure, one end of each hot-pressing head is connected to the hot-pressing head mounting plate, one side of the hot-pressing head mounting plate relatively close to the hot-pressing head selectively contacts the transfer plate, and the other side of the hot-pressing head mounting plate is connected to the support.

Optionally, the hot-pressing head mounting plate includes a hot-pressing head mounting plate body, at least one spring, and at least one bushing, each spring and each bushing are both arranged in the hot-pressing head mounting plate body, one end of one bushing is connected to the hot-pressing head mounting plate body, another end of the bushing is connected to one hot-pressing head, and one spring is sleeved outside the bushing.

Optionally, the hot-pressing head mounting plate body is provided with at least one cavity, and one spring and one bushing are both arranged in one cavity.

Optionally, the heating component further includes a heating rod configured to heat the hot-pressing head, and the heating rod is arranged in the hot-pressing head mounting plate body.

Optionally, the transfer plate includes a well plate transfer plate, a lower mold plate, and a film pressing frame, the well plate transfer plate is connected to the lower mold plate, and the film pressing frame is connected to the lower mold plate, so as to enable a heat-sealing film to flatly cover above a multi-well plate and to ensure that the heat-sealing film does not deviate during a heat-sealing process; and the lower mold plate is connected to the support, and the film pressing frame selectively contacts the hot-pressing head mounting plate.

Optionally, the lower mold plate is provided with an accommodating cavity configured to place the well plate transfer plate.

Optionally, mounting members are arranged along a periphery of the lower mold plate, and the film pressing frame is connected to the lower mold plate through the mounting members, so as to enable a heat-sealing film to flatly cover above a multi-well plate and to ensure that the heat-sealing film does not deviate during a heat-sealing process.

Optionally, the support includes a telescopic device, and the telescopic device is connected to the hot-pressing head mounting plate, so as to push the heating component and the transfer plate to selectively contact.

Optionally, the support includes a fixed mold sliding bottom plate and a bottom fixing plate, the fixed mold sliding bottom plate is connected to the transfer plate, a slide rail is arranged on the bottom fixing plate, and the fixed mold sliding bottom plate is slidably connected to the bottom fixing plate through the slide rail.

In a fourth aspect, an embodiment of the present invention provides a high-throughput screening system, which includes the well plate heat-sealing device according to any one of the foregoing embodiments.

Compared with the prior art, the embodiments of the present invention have the following beneficial effects.

For example, according to embodiments of the present invention, sealing of a single well with a small volume is achieved by covering a layer of film above a blind well of a well plate and then performing heat sealing, thereby expanding an applicable range of a reaction temperature and a reaction solvent for a high-throughput screening method based on the well plate, implementing reactions under high-temperature conditions and conditions higher than a boiling point of a solvent, and implementing heating and oscillation reaction conditions.

The well plate heat-sealing device provided by the embodiment of the present invention achieves a high-temperature and rapid (<5 s) heat-sealing process, thereby ensuring that a temperature of a liquid or a solid in a blind well of a well plate is always lower than 30 °C during the heat-sealing process, such that a temperature change of the liquid or the solid does not affect subsequent high-throughput screening and properties of a heat-sensitive liquid or a heat-sensitive solid do not change due to the temperature change; improving mechanical strength of a heat-sealing portion of the well plate to ensure that sealing does not fail in subsequent use scenarios such as heating and/or oscillation; and ensuring uniformity of sealing of a multi-well plate.

### BRIEF DESCRIPTION OF DRAWINGS

To more clearly illustrate the technical solutions of the embodiments of the present invention, the drawings required in the embodiments will be briefly described below. It should be understood that the following drawings only illustrate some embodiments of the present invention and therefore should not be considered as limitations of the scope, and for those of ordinary skill in the art, other related drawings can be obtained according to these drawings without creative efforts.
FIG. 1 is a diagram of an existing high-throughput screening device according to an embodiment of the present invention;
FIG. 2 is a diagram showing an existing sealing mode of a well plate reaction device according to an embodiment of the present invention;
FIG. 3 is a schematic flow diagram of a high-throughput screening method according to an embodiment of the present invention;
FIG. 4 is a partial schematic diagram of a sealing mode of a blister well plate according to Example 1 of the present invention;
FIG. 5 is an apparent kinetic curve diagram according to Example 1 of the present invention;
FIG. 6 is a diagram showing a forming result of a blister well plate according to Comparative Example 1 of the present invention;
FIG. 7 is a diagram showing a forming result of a blister well plate according to Comparative Example 2 of the present invention;
FIG. 8 is a diagram showing a forming result of a blister well plate according to Comparative Example 3 of the present invention;
FIG. 9 is a diagram showing a heat-sealing result according to Comparative Example 4 of the present invention;
FIG. 10 is a diagram showing a heat-sealing result according to Comparative Example 5 of the present invention;
FIG. 11 is a diagram showing a heat-sealing result according to Comparative Example 6 of the present invention;
FIG. 12 is a diagram showing a heat-sealing result according to Comparative Example 7 of the present invention;
FIG. 13 is a diagram showing a heat-sealing result according to Comparative Example 8 of the present invention;
FIG. 14 is a diagram showing a heat-sealing result according to Comparative Example 9 of the present invention;
FIG. 15 is a diagram showing a heat-sealing result of heating and oscillation according to Comparative Example 10 of the present invention;
FIG. 16 is a diagram showing a forming result of a blister well plate according to Comparative Example 11 of the present invention;
FIG. 17 is a diagram showing a forming result of a blister well plate according to Comparative Example 12 of the present invention;
FIG. 18 is a diagram showing a forming result of a blister well plate according to Comparative Example 13 of the present invention;
FIG. 19 is a schematic diagram of a structure of a well plate heat-sealing device according to an embodiment of the present invention;
FIG. 20 is a schematic diagram of a structure of a heating component according to an embodiment of the present invention;
FIG. 21 is a schematic diagram of a structure of a hot-pressing head mounting plate according to an embodiment of the present invention;
FIG. 22 is a schematic diagram of a structure of a transfer plate according to an embodiment of the present invention;
FIG. 23 is an exploded view of a transfer plate according to an embodiment of the present invention;
FIG. 24 is a schematic diagram showing a structure of a contact position between a hot-pressing head mounting plate and a transfer plate according to an embodiment of the present invention; and
FIG. 25 is a partial schematic diagram showing a contact position between a hot-pressing head mounting plate and a transfer plate according to an embodiment of the present invention.

Reference numerals: 100. well plate heat-sealing device; 111. top fixing plate; 112. aluminum profile frame; 113. bottom fixing plate; 114. slide rail; 115. fixed mold sliding bottom plate; 120. telescopic device; 116. first connecting plate; 117. second connecting plate; 130. heating component; 140. transfer plate; 134. hot-pressing head mounting plate; 132. spring; 133. hot-pressing head; 131. bushing; 135. hot-pressing head mounting plate body; 141. well plate transfer plate; 142. lower mold plate; 143. film pressing frame; and 144. mounting hole.

### DETAILED DESCRIPTION OF EMBODIMENTS

To make the object, technical solutions and advantages of the embodiments of the present invention clearer, the technical solutions of the embodiments of the present invention will be clearly and completely described below in conjunction with the drawings of the embodiments of the present invention. Obviously, the described embodiments are part of the embodiments of the present invention and not all of the embodiments. Typically, the components of the embodiments of the present invention described and shown in the drawings herein can be arranged and designed in various different configurations. Unless otherwise specified, the experimental conditions described in the examples are conducted under existing conditions or in accordance with conditions recommended by manufacturers. Unless otherwise indicated, reagents or instruments used in the examples are commercially available products.

Thus, the following detailed description of the embodiments of the present invention provided in the drawings is not intended to limit the scope of the claimed present invention, but merely to represent the selected embodiments of the present invention. All other embodiments obtained by those of ordinary skill in the art based on embodiments of the present invention without inventive efforts shall fall within the protection scope of the present invention.

It should be noted that similar reference numerals and letters indicate similar items in the following drawings, and therefore, once an item is defined in one of the drawings, no further definition or explanation is required in the following drawings.

In the description of the present invention, it should be noted that terms such as "center", "upper", "lower", "left", "right", "vertical", "horizontal", "inner", and "outer" indicate positional or orientational relationships based on the orientations or positions shown in the drawings, or based on the orientations or positions customarily used when the product of the present invention is placed during use. These terms are provided merely for facilitating the description of the present invention and simplifying the description, and are not intended to indicate or imply that the referenced devices or elements must have specific orientations, or must be constructed or operated in specific orientations, and therefore these terms should not be construed as limiting the present invention. In addition, the terms "first", "second", and "third" are used only for distinguishing descriptions and should not be construed as indicating or implying relative importance.

In addition, terms such as "horizontal" and "vertical" do not indicate that components are required to be absolutely horizontal or suspended, and the components can be slightly inclined. For example, the term "horizontal" merely indicates that a direction is more horizontal relative to "vertical", and does not indicate that the structure must be completely horizontal, and the structure can be slightly inclined.

In the description of the present invention, it should also be noted that unless otherwise explicitly specified or limited, the terms "provide", "mount", "connect", and "link" should be understood in a broad sense. For example, the terms can refer to fixed connection, detachable connection, or integral connection; can refer to mechanical connection or electrical connection; can refer to direct connection or indirect connection through an intermediate medium; and can also refer to communication between two components internally. Those of ordinary skill in the art can interpret specific meanings of the foregoing terms in the present invention according to specific cases.

Thermoplastic plastics (also referred to as thermosoftening plastics or thermo plastics) described in embodiments of the present invention refer to a class of plastics that are deformable at a certain temperature, harden when cooled, and allow for this repeated process. The thermoplastic plastics are selected from any one of polyolefin materials, polyester materials, polyamide materials, or polyurethane materials, or a composite material formed from a combination of at least two thereof.

The polyolefin materials (polyolefins) described in the present invention refer to a general term for a class of thermoplastic resins obtained by homopolymerization or copolymerization of α-olefins, such as ethylene, propylene, 1-butene, 1-pentene, 1-hexene, 1-octene, and 4-methyl-1-pentene, and certain cycloolefins.

The polyester materials (polyethylene terephthalate) described in the present invention refer to a general term for polymers obtained by polycondensation of polyhydric alcohols and polybasic acids.

The polyamide materials described in the present invention are composed of aliphatic, aromatic, or mixed aliphatic-aromatic dicarboxylic acids and aliphatic, aromatic, or mixed aliphatic-aromatic diamines.

The polyurethane materials described in the present invention are composed of isocyanates (or polyisocyanates), polyols, and some auxiliary agents.

The FEP (fluorinated ethylene propylene) material described in the present invention is a polymer material obtained by copolymerization of tetrafluoroethylene and hexafluoropropylene.

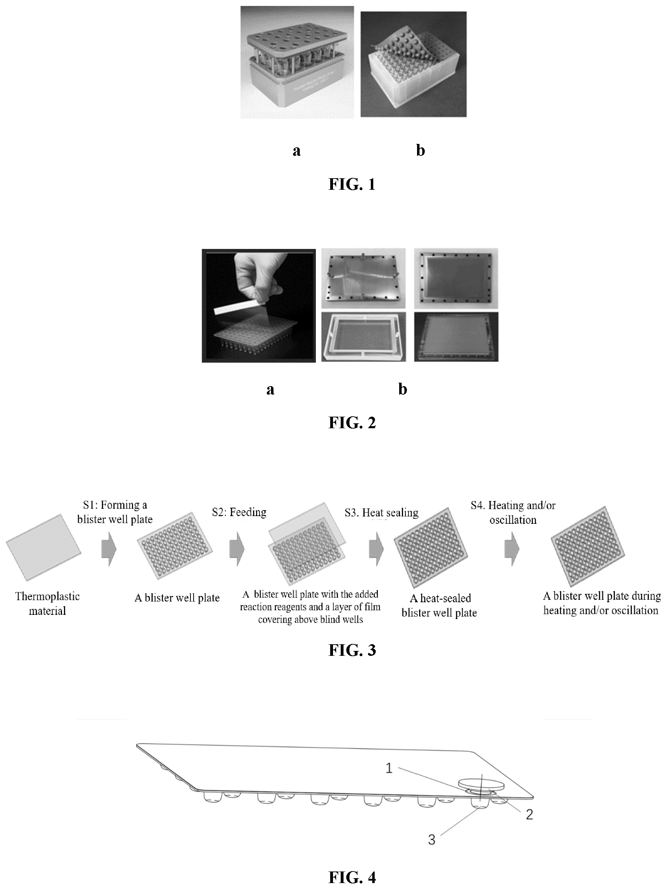

An embodiment of the present invention provides a high-throughput screening method, referring to FIG. 3, which includes the following steps S1 to S4.

S1, Forming of a blister well plate.

The blister well plate is formed by performing a forming process on a thermoplastic material. Specifically, forming the blister well plate includes:
heating a thermoplastic material having a suitable thickness to a temperature near a melting point of the thermoplastic material, and then processing a thermoplastic material substrate into a mold shape by using a forming process to form the blister well plate.

The thermoplastic material has a thickness of 0.15-0.8 mm, for example any numerical value between 0.15-0.8 mm, such as 0.15 mm, 0.2 mm, 0.3 mm, 0.4 mm, 0.5 mm, 0.6 mm, 0.7 mm, or 0.8 mm, or any range between any two numerical values thereof, preferably 0.2-0.6 mm.

When the thickness of the thermoplastic material is higher than or lower than the above thickness range, a thermoforming effect may be poor, and further a formed blister well plate cannot be used for subsequent heat sealing. When the thickness of the thermoplastic material is lower than the preferred range, a plastic sheet has a high degree of softening during thermoforming; consequently, partial regions of a formed blister well plate are very thin, and a phenomenon of insufficient structural strength of blind wells occurs. When the thickness of the thermoplastic material is higher than the preferred range, a plastic sheet cannot be completely fitted with a mold during thermoforming, and partial regions of a formed blister well plate cannot form complete and rounded blind well structures.

The heating temperature is 5-30 °C lower than a melting point of the thermoplastic material, for example any value of 5-30 °C, such as 5 °C, 10 °C, 15 °C, 20 °C, 25 °C, or 30 °C lower than the melting point of the thermoplastic material, or any range between any two values thereof, preferably 5-25 °C lower than the melting point of the thermoplastic material, and more preferably 5-20 °C lower than the melting point of the thermoplastic material.

When the heating temperature is higher than or lower than the above temperature range, thermoforming may be poor, and further a formed blister well plate cannot be used for subsequent heat sealing. When the heating temperature is higher than the preferred range, a plastic sheet has a high degree of softening during thermoforming, and partial regions or even all regions of a formed blister well plate have collapsed blind well structures. When the heating temperature is lower than the preferred range, a plastic sheet cannot be completely fitted with a mold during thermoforming, and partial regions of a formed blister well plate do not form complete and rounded blind well structures.

Alternatively, the thermoplastic material is heated to a molten state, and a heating temperature is not particularly limited as long as the thermoplastic material is in a molten liquid state. For example, the heating temperature is any value such as 5 °C, 10 °C, 15 °C, 20 °C, 25 °C, or 30 °C higher than the melting point of the thermoplastic material, preferably 5-25 °C higher than the melting point of the thermoplastic material, and more preferably 5-20 °C higher than the melting point of the thermoplastic material.

The forming process includes, but is not limited to, a thermoforming process, and specifically can be any one of a blow molding process, a vacuum forming process, and an injection molding process. For example, when the heating temperature is 5-30 °C lower than the melting point of the thermoplastic material, a blow molding process or a vacuum forming process is adopted; or, when the thermoplastic material is heated to a molten state, an injection molding process is adopted.

Further, for example, in a case of a vacuum forming process, a thermoplastic material having a suitable thickness is heated to a temperature near a melting point of the thermoplastic material and the temperature is maintained for a duration, then the thermoplastic material is rapidly conveyed to above a mold, and the thermoplastic material is vacuum-formed in a vacuum environment.

A vacuum degree parameter and a holding duration of the vacuum environment are not limited, and vacuum forming is performed until the thermoplastic material is fitted to the mold, because a smooth metal mold fitted with a blind well provides mechanical protection and no perforation occurs when the vacuum degree is excessively high or the duration is excessively long; preferably, the vacuum degree is not less than 0.07 MPa (negative pressure), and the vacuum duration is not less than 5 s. The vacuum degree parameter is increased as the thickness of the thermoplastic material increases.

In a case of a blow molding process, a thermoplastic material sheet having a suitable thickness is placed above a mold, the thermoplastic material is heated to a temperature near a melting point of the thermoplastic material, and the thermoplastic material is blow-molded under a certain pressure.

A pressure parameter and a duration are not limited, and blow molding is performed until the thermoplastic material is fitted to a mold, because a smooth metal mold fitted with a blind well provides mechanical protection and no perforation occurs when the pressure is excessively high or the duration is excessively long. Preferably, the pressure is not less than 0.4 MPa, and the pressure duration is not less than 10 s. The pressure duration and the pressure value are increased as the thickness of the thermoplastic material increases.

It should be noted that in both the vacuum forming process and the blow molding process, the thickness and the heating temperature of the thermoplastic material are the same as those defined above.

Specifically, the thermoplastic material includes, but is not limited to, polyethylene (PE), polypropylene (PP), polyvinyl chloride (PVC), polystyrene (PS), polyethylene terephthalate (PET), polybutylene terephthalate (PBT), polyarylate (PAR), polyphenylene oxide (PPO), polymethyl methacrylate (PMMA), polycarbonate (PC), nylon (PA), fluorinated ethylene propylene (FEP), polychlorotrifluoroethylene (PCTFE), and a composite material (a PCTFE and PVC composite bilayer material).

The following embodiments of the present invention are illustrated using the formation of PP material as an example.

The forming process includes: heating the PP material to 130-165 °C, maintaining the temperature for 50-100 s, and maintaining a vacuum environment for not less than 5 s, where a thickness of the PP material is 0.15-0.8 mm.

When the PP material is vacuum-formed, the heating temperature is maintained for 50-100 s, for example, any value between 50-100 s, such as 50 s, 60 s, 70 s, 80 s, 90 s, or 100 s, or any range between any two values thereof, preferably 70-90 s.

When the PP material is vacuum-formed, the heating temperature is any value between 130-165 °C such as 130 °C, 140 °C, 150 °C, 160 °C, or 165 °C, or any range between any two values thereof, preferably 150-155 °C.

Alternatively, the forming process includes: heating the PP material to 130-165 °C, and blow-molding the PP material for not less than 10 s under a pressure not less than 0.4 MPa, where a thickness of the PP material is 0.15-0.8 mm.

When the PP material is blow-molded, the heating temperature is any value between 130-165 °C such as 130 °C, 140 °C, 150 °C, 160 °C, or 165 °C, or any range between any two values thereof, preferably 140-150 °C.

When the PP material is vacuum-formed or blow-molded, the thickness of the PP material is any value between 0.15-0.8 mm such as 0.15 mm, 0.2 mm, 0.3 mm, 0.4 mm, 0.5 mm, 0.6 mm, 0.7 mm, or 0.8 mm, or any range between any two values thereof, preferably 0.2-0.6 mm.

The following embodiments of the present invention are illustrated using the formation of FEP material as an example.

The forming process includes: heating the FEP material to 220-260 °C, maintaining the temperature for 50-100 s, and maintaining a vacuum environment for not less than 5 s, where a thickness of the FEP material is 0.15-0.8 mm.

When the FEP material is vacuum-formed, the heating temperature is maintained for 50-100 s, for example, any value between 50-100 s such as 50 s, 60 s, 70 s, 80 s, 90 s, or 100 s, or any range between any two values thereof, preferably 70-90 s.

Alternatively, the forming process includes: heating the FEP material to 220-260 °C, and blow-molding the FEP material for not less than 10 s under a pressure not less than 0.4 MPa, where a thickness of the FEP material is 0.15-0.8 mm.

When the FEP material is vacuum-formed or blow-molded, the thickness of the FEP material is any value between 0.15-0.8 mm, such as 0.15 mm, 0.2 mm, 0.3 mm, 0.4 mm, 0.5 mm, 0.6 mm, 0.7 mm, or 0.8 mm, or any range between any two values thereof, preferably 0.2-0.6 mm.

When the FEP material is vacuum-formed or blow-molded, the heating temperature is any value between 220-260 °C, such as 220 °C, 230 °C, 240 °C, 250 °C, or 260 °C, or any range between any two values thereof, preferably 240-250 °C.

An entire shape of the blind well of the blister well plate provided in an embodiment of the present invention is one selected from a quasi-hemispherical shape or a quasi-semi-ellipsoidal shape, preferably a quasi-hemispherical shape. A cross-sectional shape of the blind well of the blister well plate is one selected from a circular shape, a quasi-circular shape, an elliptical shape, and a quasi-elliptical shape, preferably a circular shape.

To achieve sealing of a single well with a small volume, a sealing ring needs to be formed at an opening of each blind well, and a space for forming the sealing ring needs to be reserved between two adjacent blind wells.

Specifically, the sealing ring is formed at the opening of the blind well of the blister well plate after heat sealing, and a shape of the sealing ring is identical to a shape of the blind well, namely, when a cross section of the blind well is circular, the sealing ring is a circular ring, when the cross section of the blind well is elliptical, the sealing ring is an elliptical ring, and when the cross section of the blind well is quasi-circular, the sealing ring is a quasi-circular ring. Meanwhile, the opening of the blind well is completely covered by a heat-sealing ring, namely, an inner contour of the sealing ring completely covers an outer contour of the opening of the blind well or is flush with an outer contour of the opening of the blind well.

Outer contours of adjacent sealing rings do not intersect, and a ring width of the sealing ring is not less than 1 mm. When outer contours of adjacent sealing rings intersect, cross contamination easily occurs between adjacent blind wells; and when a ring width of the sealing ring is less than 1 mm, mechanical strength of sealing is poor, and leakage of a liquid in a blind well easily occurs.

S2, Feeding.

A reaction solution and/or a solid prepared for a chemical reaction for high-throughput screening are added to the above blister well plate. Specifically, a prepared reaction solution is added to each blind well sequentially by using a manual pipettor or an automatic liquid handling device, and in a case of a solid-liquid two-phase reaction, a required solid for the reaction is added to each blind well sequentially by using a manual weighing addition method or an automatic weighing addition method.

S3, Heat sealing.

The blister well plate with the added reaction reagents is transferred into a heat-sealing device, a layer of film having a suitable thickness is covered above blind wells of the blister well plate, a material forming the film is identical to a material of a portion of the well plate in contact with the film, and then a heat-sealing temperature and a heat-sealing duration of the heat-sealing device are set, where a sealing ring is formed at an opening of each blind well of the blister well plate after heat sealing.

Further, heat-sealing conditions includes a heat-sealing temperature 5-65 °C higher than a melting point of the material of the film, for example any value between 5-65 °C, such as 5 °C, 10 °C, 20 °C, 30 °C, 40 °C, 50 °C, 60 °C, or 65 °C, or any range between any two values thereof, preferably 10-55 °C higher than the melting point of the material of the film, and more preferably 10-50 °C higher than the melting point of the material of the film. The above heat-sealing temperature is limited to the above range, and when the heat-sealing temperature is higher than the above range, a temperature of a liquid in a blind well cannot be maintained below 30 °C during the entire heat-sealing process, and a heat-sealing film easily melts, ruptures, and adheres directly to a pressing head of a heat-sealing device; and when the heat-sealing temperature is lower than the above range, a heat-sealing effect is poor, and leakage of a liquid in the blister well plate occurs.

The heat-sealing duration is 0.3-4.5 s, for example, any value between 0.3-4.5 s, such as 0.3 s, 1 s, 2 s, 3 s, 4 s, or 4.5 s, or any range between any two values thereof, preferably 0.5-4 s, more preferably 0.5-3 s, and further preferably 0.5-1 s or 1-3 s.

When the heat-sealing duration is higher than or lower than the above range, a heat-sealing effect may be poor, and the heat-sealing film cannot be used for subsequent reactions. When the heat-sealing duration is higher than the preferred range, a temperature of a liquid in a blind well cannot be maintained below 30 °C during an entire heat-sealing process, and a heat-sealing film easily melts, ruptures, and adheres directly to a pressing head of a heat-sealing device; and when the heat-sealing temperature is lower than the above range, a heat-sealing effect is poor, and leakage of a liquid in the blister well plate occurs.

The film has a thickness of 0.04-0.18 mm, for example, any value between 0.04-0.18 mm, such as 0.04 mm, 0.05 mm, 0.08 mm, 0.1 mm, 0.12 mm, 0.14 mm, 0.15 mm, or 0.18 mm, or any range between any two values thereof, preferably 0.04-0.15 mm, and more preferably 0.04-0.1 mm.

When the thickness of the film is below the range defined in the embodiments of the present invention, the film easily melts and forms perforations during heat sealing. When the thickness of the film is excessively high, a heat-sealing effect is poor, a heat-sealing duration is greatly prolonged, and a temperature of a liquid in a blind well cannot be maintained below 30 °C during an entire heat-sealing process, thereby adversely affecting control of reaction temperature conditions. Meanwhile, the thickness of the film defined in embodiments of the present invention ensures that a heat-sealing film formed after heat sealing is directly pierceable by a sampling needle of a detection device for sample injection, thereby facilitating use.

Further, a material forming the film is identical to a material of a portion of the well plate in contact with the film, that is, when a thermoplastic material forming the blister well plate is a single material, the material forming the film is also a single material, for example both are PP materials. When a thermoplastic material forming the blister well plate is a composite homogeneous material, the material forming the film is also a composite homogeneous material, for example, both are acrylonitrile-butadiene-styrene copolymer/polycarbonate blends (PC/ABS). When a thermoplastic material forming the blister well plate is a composite multilayer material, the material forming the film is selected as a single material identical to an outer layer material on one side of the composite multilayer material forming the blister well plate, for example, the blister well plate is polyvinyl chloride/polyvinylidene chloride (PVC/PVDC), and the material forming the film is polyvinyl chloride (PVC), and the film covers a PVC surface of the blister well plate; or the material forming the film is a composite multilayer material, and a material of one outer layer is identical to a material of one outer layer of the composite multilayer material forming the blister well plate, for example, the blister well plate is polyvinyl chloride/polyvinylidene chloride (PVC/PVDC), and the material forming the film is polychlorotrifluoroethylene/polyvinyl chloride (PCTFE/PVC), and a PVC surface of the film covers a PVC surface of the blister well plate. The PC/ABS, PVC/PVDC, and PCTFE/PVC are all existing materials.

Specifically, when the film is a PP film, a thickness of the PP film is 0.04-0.18 mm, for example, any value between 0.04-0.18 mm, such as 0.04 mm, 0.05 mm, 0.08 mm, 0.1 mm, 0.12 mm, 0.14 mm, 0.15 mm, or 0.18 mm, or any range between any two values thereof, preferably 0.05-0.15 mm, and more preferably 0.04-0.1 mm.

A heat-sealing temperature is 170-215 °C, for example, any value between 150-215 °C, such as 170 °C, 180 °C, 190 °C, 200 °C, 210 °C, or 215 °C, or any range between any two values thereof, preferably 180-210 °C.

A heat-sealing duration is 0.5-4.5 s, for example, any value between 0.5-4.5 s, such as 0.5 s, 1 s, 2 s, 3 s, 4 s, or 4.5 s, or any range between any two values thereof, for example, preferably 0.5-3 s, and more preferably 1-3 s.

When the film is an FEP film, a thickness of the FEP film is 0.04-0.18 mm, for example, any value between 0.04-0.18 mm, such as 0.04 mm, 0.05 mm, 0.08 mm, 0.1 mm, 0.12 mm, 0.14 mm, 0.15 mm, 0.18 mm, or 0.2 mm, or any range between any two values thereof, for example, preferably 0.05-0.15 mm, and more preferably 0.04-0.1 mm.

A heat-sealing temperature is 250-350 °C, for example, any value between 250-350 °C such as 250 °C, 260 °C, 270 °C, 280 °C, 290 °C, 300 °C, 310 °C, 320 °C, 330 °C, 340 °C, or 350 °C, or any range between any two values thereof, for example, preferably 280-300 °C.

A heat-sealing duration is 0.3-4.5 s, for example, any value between 0.3-4.5 s, such as 0.3 s, 1 s, 2 s, 3 s, 4 s, or 4.5 s, or any range between any two values thereof, for example, preferably 0.5-3 s, and more preferably 0.5-1 s.

S4, Heating and/or oscillation.

The heat-sealed blister well plate is placed on a heating and/or oscillation device, and a heating temperature and a reaction duration are set.

When the heating temperature is higher than a boiling point of a solvent during heating and/or oscillation, secondary reinforced sealing is performed on the blister well plate to prevent swelling and rupture of the blister well plate.

Specifically, a device for implementing heating and/or oscillation is provided with a boss, and when the heating temperature is higher than the boiling point of the solvent, the boss contacts the sealed blister well plate to perform secondary reinforced sealing on the blind well of the blister well plate. For example, when ethanol is used as a reaction solvent and the heating temperature is higher than 85 °C, a forced sealing method is adopted to further reinforce sealing, otherwise blind wells are prone to swelling and rupture. When the heating temperature is not higher than the boiling point of the solvent, secondary reinforced sealing is not required.

It should be noted that when only oscillation is performed without heating, the device cannot be provided with the boss.

The secondary reinforced sealing in embodiments of the present invention refers to further sealing the sealed blister well plate formed after heat sealing in the step S3 by bringing the boss into contact with the sealed blister well plate, so as to avoid swelling and rupture of blind wells. A diameter of the boss is between an outer diameter and an inner diameter of a sealing ring at an opening of a blind well of the blister well plate. The reinforced sealing of the blister well plate is thereby achieved, so as to ensure that blind wells do not swell and rupture under conditions higher than the boiling point of the solvent.

The features and performance of the present invention are further described in detail below with reference to examples.

### Example 1

A high-throughput screening method was performed by taking the following chemical reaction as an example:

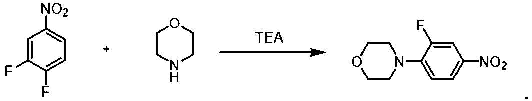

Specifically, a PP sheet was heated to 150 °C and the temperature was maintained for 75 s, a thickness of the PP sheet was 0.4 mm, a vacuum degree for vacuum forming was set to 0.08 MPa (negative pressure), and a duration of a vacuum environment was 10 s, so as to obtain a blister well plate, where a cross-sectional shape of a blind well of the blister well plate was circular, an overall shape was quasi-hemispherical, a diameter of an opening of the blind well was 6 mm, and a distance between two adjacent blind wells (center-to-center) was 10 mm.

Reaction raw materials were added to each blind well of the above obtained blister well plate. Specifically, in a reaction solution in each blind well, a concentration of a reactant 3,4-difluoronitrobenzene was 0.05 M, a concentration of a reactant morpholine was 0.1 M, a concentration of a base triethylamine was 0.25 M, and a volume of a solvent ethanol was 50 µL.

Heat sealing was then performed, where during heat sealing, a thickness of a heat-sealing PP film was 0.04 mm, a heat-sealing temperature was set to 200 °C, and a heat-sealing duration was set to 2 s, and after heat sealing, a sealing ring having a ring width of 1 mm and an inner diameter of 7 mm was formed, the sealing ring and the blind well were concentrically arranged, and outer contours of adjacent sealing rings did not intersect.

After heat sealing, the blister well plate was placed on a heating oscillator, reaction temperatures were set to 60 °C, 75 °C, and 100 °C respectively, an oscillation speed was 350 rpm, and the reaction solution from one blind well was taken out every 30 min by using a syringe for HPLC analysis. When the heating temperature is 100 °C, a partial schematic diagram of the heating oscillator is shown in FIG. 4. It can be seen from FIG. 4 that a sealing ring 1 formed by heat sealing of the film is arranged on a blind well 3 of the blister well plate, and a boss 2 contacts the blind well 3 of the sealed blister well plate, so as to perform secondary reinforced sealing.

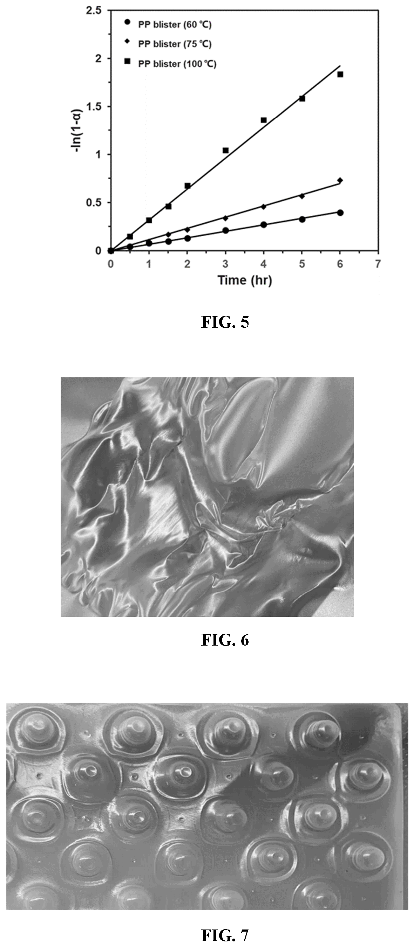

The apparent kinetic curves under three reaction temperatures were plotted according to chromatographic results (see FIG. 5).

It can be seen from FIG. 5 that the heat-sealed blister well plate meets different reaction conditions and device requirements of the above reaction formula, a reaction rate at 75 °C is improved compared with a reaction rate at 60 °C, and under a heating temperature of 100 °C higher than a boiling point of ethanol, the reaction rate is greatly increased, thereby indicating that the blister well plate still has excellent sealing performance under high-temperature conditions and even under conditions higher than a boiling point of a solvent, and can be used in high-throughput screening.

Meanwhile, it can be seen from FIG. 5 that a slope of the apparent kinetic curve increases as a reaction temperature increases, which indicates that a first-order reaction rate constant increases. A reaction using ethanol as a solvent is completed at a reaction temperature of 100 °C, which indicates that the blister well plate reactor achieves an objective of reaction intensification under a use condition higher than a boiling point of the solvent.

Meanwhile, 48 reactions under a condition of 100 °C for 24 h were performed by using the above reaction and all parameters, and experimental results are shown in Table 1.

**Table 1 Detection results**

| Yield data of 48 blind wells | | | | | | | | | | | |
|---|---|---|---|---|---|---|---|---|---|---|---|
| 96.2 | 96.1 | 94.9 | 95.8 | 96.2 | 95.1 | 97.6 | 97.0 | 95.7 | 96.8 | 96.6 | 95.1 |
| 95.0 | 94.8 | 94.2 | 97.9 | 96.9 | 94.6 | 94.9 | 96.3 | 95.9 | 97.5 | 95.8 | 96.8 |
| 97.8 | 97.2 | 97.3 | 95.2 | 96.1 | 94.2 | 97.1 | 96.8 | 95.2 | 94.2 | 94.1 | 98.0 |
| 94.7 | 95.8 | 96.6 | 95.5 | 96.3 | 96.0 | 95.2 | 95.5 | 94.0 | 97.4 | 94.2 | 96.5 |

It can be seen that the reaction uniformity of 48 wells is good, and a standard deviation of yield is 1.1%, indicating that the blister well plate and the sealing process have good reaction uniformity for high-throughput screening.

### Example 2

A high-throughput screening method was performed by taking the chemical reaction provided in Example 1 as an example.

Specifically, an FEP sheet was heated to 240 °C and the temperature was maintained for 75 s, a thickness of the FEP sheet was 0.4 mm, a vacuum degree for vacuum forming was set to 0.08 MPa (negative pressure), and a duration of a vacuum environment was 10 s, so as to obtain a blister well plate, where a cross-sectional shape of a blind well of the blister well plate was circular, an overall shape was quasi-hemispherical, a diameter of an opening was 6 mm, and a distance between two adjacent blind wells (center-to-center) was 10 mm.

Reaction raw materials were added to each blind well of the obtained blister well plate. Specifically, in a reaction solution in each blind well, a concentration of a reactant 3,4-difluoronitrobenzene was 0.05 M, a concentration of a reactant morpholine was 0.1 M, a concentration of a base triethylamine was 0.25 M, and a volume of a solvent N,N-dimethylformamide (DMF) was 50 µL.

Heat sealing was then performed, where during heat sealing, a thickness of a heat-sealing FEP film was 0.04 mm, a heat-sealing temperature was set to 280 °C, and a heat-sealing duration was set to 1 s, and after heat sealing, a sealing ring having a ring width of 1 mm and an inner diameter of 7 mm was formed, the sealing ring and the blind well were concentrically arranged, and outer contours of adjacent sealing rings did not intersect.

The heat-sealed blister well plate was placed on a heating oscillator, a reaction temperature was set to 100 °C, an oscillation speed was 350 rpm, and a reaction duration was 1 h.

A 48-well plate was directly placed into an HPLC sample tray for direct injection to obtain experimental results, and the results are shown in Table 2.

**Table 2 Detection results**

| Yield data of 48 blind wells | | | | | | | | | | | |
|---|---|---|---|---|---|---|---|---|---|---|---|
| 98.7 | 93.9 | 94.7 | 93.6 | 93.4 | 91.7 | 94.2 | 94.4 | 97.1 | 93.9 | 94.3 | 96.0 |
| 92.7 | 93.9 | 87.5 | 94.7 | 94.4 | 94.0 | 92.6 | 94.6 | 94.4 | 94.6 | 94.4 | 95.2 |
| 93.5 | 94.7 | 94.7 | 95.2 | 94.3 | 91.2 | 93.2 | 93.9 | 94.1 | 93.9 | 95.5 | 95.2 |
| 94.7 | 93.9 | 94.5 | 94.7 | 94.0 | 93.3 | 93.4 | 93.2 | 94.1 | 94.5 | 95.2 | 95.2 |

It can be seen that the reaction uniformity of 48 wells is good, and a standard deviation of yield is 1.5%, indicating that the blister well plate and the sealing process have good reaction uniformity for high-throughput screening.

Further, during heating and oscillation, when a reaction temperature reached 100 °C, at an end of a reaction, blind wells did not swell and rupture, and the sealing still remained effective.

### Examples 3-12

High-throughput screening was performed in Examples 3-12 with reference to Example 1, except that the conditions for vacuum forming of the PP material were different, and specific conditions are shown in Table 3.

**Table 3 Conditions for vacuum forming of PP material**

| | Heating temperature (°C) | Duration (s) | Thickness of PP material (mm) | Vacuum degree (MPa) | Vacuum duration (s) |
|---|---|---|---|---|---|
| Example 3 | 130 | 75 | 0.4 | 0.08 | 10 |
| Example 4 | 165 | 75 | 0.4 | 0.08 | 10 |
| Example 5 | 155 | 75 | 0.4 | 0.08 | 10 |
| Example 6 | 150 | 50 | 0.4 | 0.08 | 10 |
| Example 7 | 150 | 100 | 0.4 | 0.08 | 10 |
| Example 8 | 150 | 70 | 0.4 | 0.08 | 10 |
| Example 9 | 150 | 90 | 0.4 | 0.08 | 10 |
| Example 10 | 150 | 75 | 0.6 | 0.08 | 10 |
| Example 11 | 150 | 75 | 0.8 | 0.08 | 10 |
| Example 12 | 150 | 75 | 0.2 | 0.08 | 10 |

In Table 3, the blister well plates in Examples 3, 4, 6, 7, and 11 have good vacuum forming effects, and the blister well plates in Examples 5, 8, 9, 10, and 12 have excellent vacuum forming effects. The blister well plates in these examples can be used for subsequent heat sealing.

### Examples 13-21

High-throughput screening was performed in Examples 13-21 with reference to Example 1, except that the PP material was formed by a blow molding process, and specific conditions are shown in Table 4.

**Table 4 Conditions for blow molding of PP material**

| | Heating temperature (°C) | Thickness of PP material (mm) | Pressure (MPa) | Blow molding duration (s) |
|---|---|---|---|---|
| Example 13 | 145 | 0.4 | 0.6 | 20 |
| Example 14 | 130 | 0.4 | 0.6 | 20 |
| Example 15 | 165 | 0.4 | 0.6 | 20 |
| Example 16 | 140 | 0.4 | 0.6 | 20 |
| Example 17 | 150 | 0.4 | 0.6 | 20 |
| Example 18 | 145 | 0.2 | 0.6 | 20 |
| Example 19 | 145 | 0.6 | 0.6 | 20 |
| Example 20 | 145 | 0.8 | 0.6 | 20 |
| Example 21 | 145 | 0.15 | 0.6 | 20 |

In Table 4, the blister well plates in Examples 13, 16, 17, 18, and 19 have excellent blow molding effects, and the blister well plates in Examples 14, 15, 20, and 21 have good blow molding effects. The blister well plates in these examples can be used for subsequent heat sealing.

### Examples 22-31

High-throughput screening was performed in Examples 22-31 with reference to Example 1, except that heat-sealing process conditions were different, and specific conditions are shown in Table 5.

**Table 5 Heat-sealing conditions**

| | Thickness of PP heat-sealing film (mm) | Heat-sealing temperature (°C) | Heat-sealing duration (s) |
|---|---|---|---|
| Example 22 | 0.05 | 200 | 2 |
| Example 23 | 0.1 | 200 | 2 |
| Example 24 | 0.15 | 200 | 2 |
| Example 25 | 0.18 | 200 | 2 |
| Example 26 | 0.04 | 170 | 2 |
| Example 27 | 0.04 | 180 | 2 |
| Example 28 | 0.04 | 210 | 2 |
| Example 29 | 0.04 | 200 | 1 |
| Example 30 | 0.04 | 200 | 3 |
| Example 31 | 0.04 | 200 | 0.5 |

In Table 5, the blister well plates in Examples 22, 23, 27, 28, 29, and 30 have excellent heat-sealing effects, and the blister well plates in Examples 24, 25, 26, and 31 have good heat-sealing effects. The blister well plates in these examples have no solution leakage after heat sealing and can be used for subsequent reactions.

### Example 32

High-throughput screening was performed in Example 32 with reference to Example 1, except that the PP material was formed by an injection molding process.

First, PP resin particles were heated to 170 °C to be melted into a flowable molten plastic. The molten plastic was injected into a cavity of a mold. Then, the mold was cooled to room temperature for solidification. Finally, the mold was then opened to obtain the blister well plate as described in Example 1.

### Comparative Example 1

High-throughput screening was performed with reference to Example 1, except that during formation of a blister well plate, a PP sheet was heated to 170 °C, and a temperature of the PP sheet exceeded a melting point during a vacuum forming heating process, resulting in poor thermoforming performance, deformation in almost all regions, and inability to form a blister well plate used for subsequent heat sealing. The details are shown in FIG. 6.

### Comparative Example 2

High-throughput screening was performed with reference to Example 1, except that during formation of a blister well plate, a thickness of a PP sheet was 0.1 mm, and a PP sheet was too thin during vacuum forming, resulting in poor thermoforming performance, insufficient strength of blind wells in partial regions, easily flattened under pressure, and inability to form a blister well plate used for subsequent heat sealing. The details are referred to FIG. 7.

### Comparative Example 3

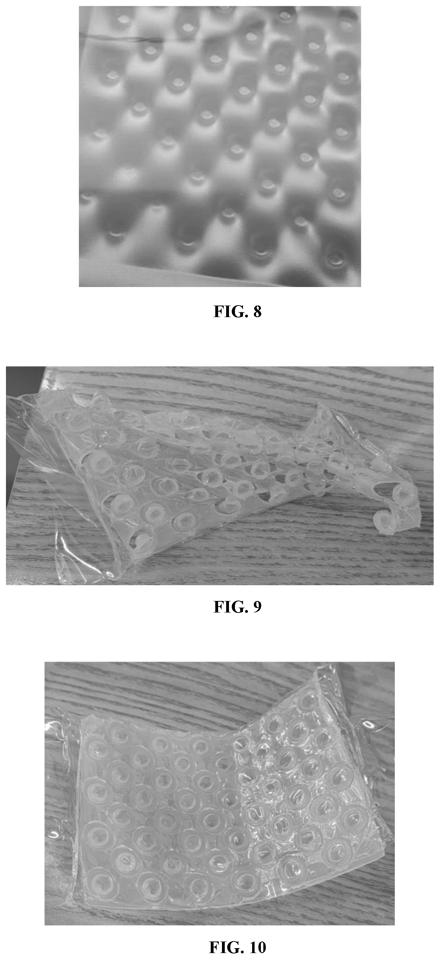

High-throughput screening was performed with reference to Example 1, except that during formation of a blister well plate, a thickness of a PP sheet was 1 mm, and a PP sheet could not conform to a mold during vacuum forming to form a blister well plate used for subsequent heat sealing, resulting in poor thermoforming performance and failure to form complete and rounded blind well structures in partial regions. The details are referred to FIG. 8.

### Comparative Example 4

High-throughput screening was performed with reference to Example 1, except that a heat-sealing temperature was 230 °C during heat sealing, and a blister well plate and a heat-sealing film melted and ruptured, and directly adhered to a hot-pressing head, resulting in poor heat-sealing performance and inability to be used for subsequent heating and oscillation. The details are referred to FIG. 9.

### Comparative Example 5

High-throughput screening was performed with reference to Example 1, except that a heat-sealing duration was 5 s during heat sealing, a temperature of liquid in blind wells was higher than 30 °C (a temperature of a bottom surface of blind wells reached 40-50 °C), and an overall deformation of blind wells occurred (plastic tended to shrink and aggregate during heating), resulting in poor heat-sealing performance and inability to be used for subsequent heating and oscillation. The details are referred to FIG. 10.

### Comparative Example 6

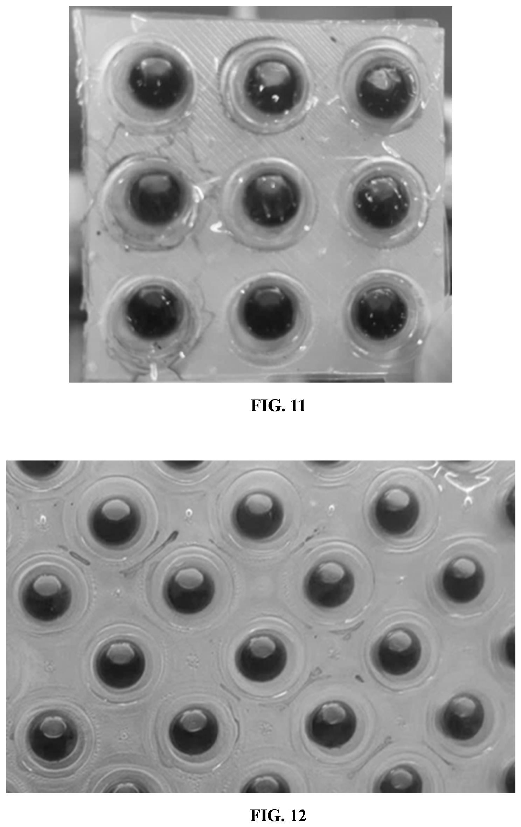

High-throughput screening was performed with reference to Example 1, except that a heat-sealing temperature was 160 °C during heat sealing, partial blind wells are not completely sealed, and liquid leakage occurs, and unsealed blind wells cannot be used for subsequent heating and oscillation. The details are referred to FIG. 11.

### Comparative Example 7

High-throughput screening was performed with reference to Example 1, except that a heat-sealing duration was 0.3 s during heat sealing, partial blind wells were not completely sealed, and liquid leakage occurred, and unsealed blind wells could not be used for subsequent heating and oscillation. The details are referred to FIG. 12.

### Comparative Example 8

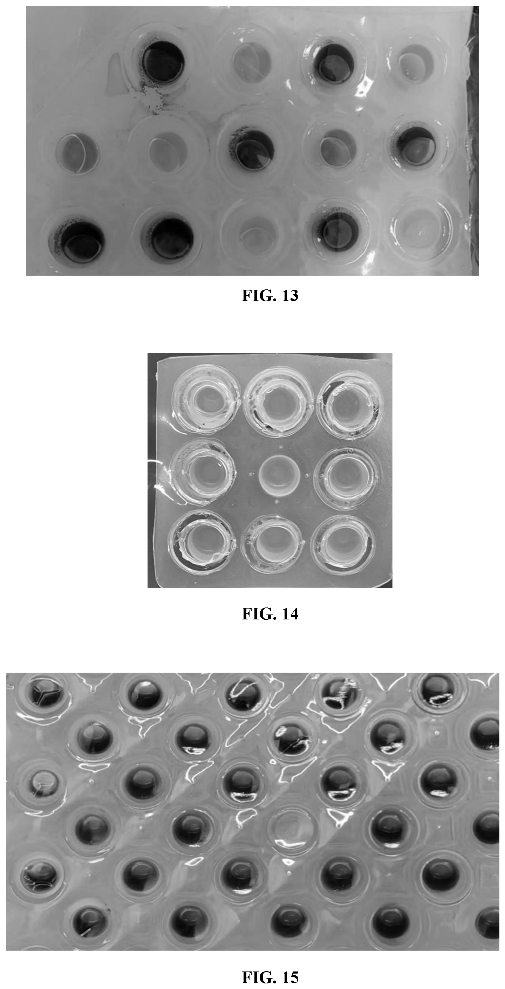

High-throughput screening was performed with reference to Example 1, except that a PP film had a thickness of 0.2 mm during heat sealing, partial blind wells were not completely sealed, and liquid leakage occurred, and unsealed blind wells could not be used for subsequent heating and oscillation. The details are referred to FIG. 13.

### Comparative Example 9

High-throughput screening was performed with reference to Example 1, except that a thickness of a PP film was 0.02 mm during heat sealing, and due to a relatively low thickness, a blister well plate and a heat-sealing film were partially melted and then cut by a hot-pressing head, resulting in non-uniform distribution of surface materials, thereby resulting in poor heat-sealing performance and inability to be used for subsequent heating and oscillation. The details are referred to FIG. 14.

### Comparative Example 10

High-throughput screening was performed with reference to Example 1, except that the device used during heat sealing was not provided with a boss, no additional forced sealing method was used, other heat-sealing conditions were the same as those in Example 1, and when a reaction temperature was 100 °C, sealing failure occurred in partial blind wells of a blister well plate, and during heating, a solution in blind wells with sealing failure was completely volatilized, and traces of solution leakage existed between blind wells. The details are referred to FIG. 15.

### Comparative Example 11

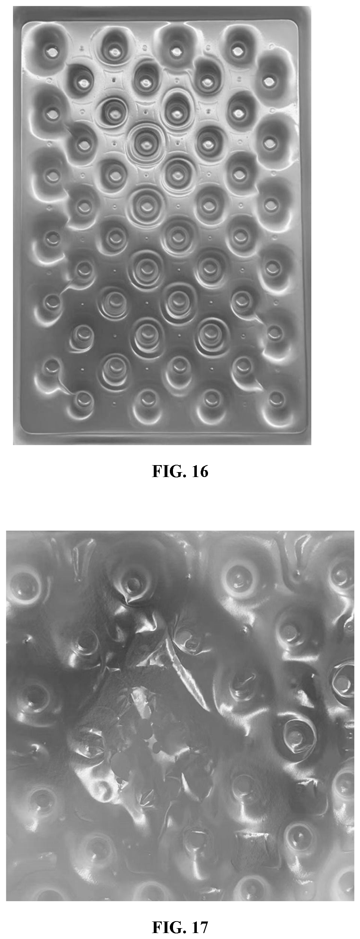

High-throughput screening was performed with reference to Example 1, except that during formation of a blister well plate, a heating duration of a PP sheet was 45 s, and during vacuum forming, softening degree of partial regions, especially edge regions, of the PP sheet was insufficient, resulting in inability to conform to a mold to form a blister well plate used for subsequent heat sealing, thereby resulting in poor thermoforming performance and failure to form complete and rounded blind well structures in partial regions. The details are referred to FIG. 16.

### Comparative Example 12

High-throughput screening was performed with reference to Example 1, except that during formation of a blister well plate, a heating duration of a PP sheet was 110 s, and a surface of the PP sheet had a very high degree of softening, resulting in poor thermoforming performance and collapse of partial blind well structures, and inability to form a blister well plate used for subsequent heat sealing. The details are referred to FIG. 17.

### Comparative Example 13

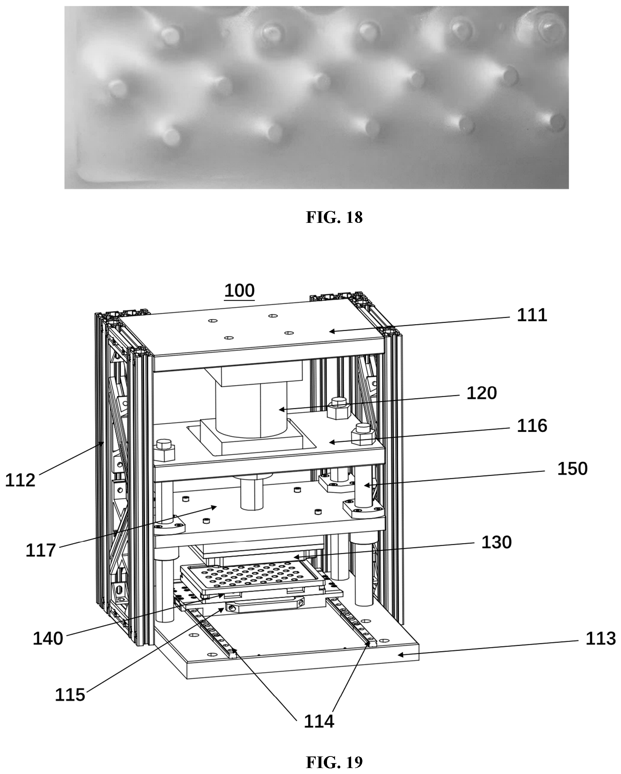

High-throughput screening was performed with reference to Example 1, except that during formation of a blister well plate, a PP sheet was heated to 120 °C, and during vacuum forming, a surface of the PP sheet was hardly softened, resulting in inability to conform to a mold to form a blister well plate used for subsequent heat sealing, thereby resulting in poor thermoforming performance and failure to form complete and rounded blind well structures. The details are referred to FIG. 18.

Referring to FIG. 19, an embodiment of the present invention provides a well plate heat-sealing device 100, which includes a support, and the support is configured to accommodate components and ensure stability of the well plate heat-sealing device 100. Specifically, the support includes an aluminum profile frame 112, a top fixing plate 111, and a bottom fixing plate 113, where the top fixing plate 111 and the bottom fixing plate 113 are respectively located on two sides of the aluminum profile frame 112, that is, the top fixing plate 111 and the bottom fixing plate 113 are oppositely arranged, and the top fixing plate 111 and the bottom fixing plate 113 are both connected to the aluminum profile frame 112. The aluminum profile frame 112 can bear a reaction force from a force-applying device, thereby maintaining stability of the device.

Further, the support further includes a telescopic device 120, a first connecting plate 116, and a second connecting plate 117, where the first connecting plate 116 and the second connecting plate 117 are arranged between the top fixing plate 111 and the bottom fixing plate 113 and are arranged along a vertical direction. One side of the first connecting plate 116 is connected to one side of the second connecting plate 117 through a plurality of guide columns, and the other side of the second connecting plate 117 is connected to the bottom fixing plate 113 through a plurality of guide columns.

It should be noted that the telescopic device 120 can be a device capable of achieving telescopic movement such as an air cylinder, a hydraulic cylinder, or a telescopic rod, and an air cylinder is taken as an example in embodiments of the present invention.

Specifically, a cylinder body portion of the air cylinder is disposed between the first connecting plate 116 and the top fixing plate 111 and is connected to the top fixing plate 111, and a piston rod of the air cylinder passes through the second connecting plate 117, such that the piston rod of the air cylinder can move vertically up and down along a direction of guide columns.

The well plate heat-sealing device 100 further includes a heating component 130, and the heating component 130 is disposed between the second connecting plate 117 and the bottom fixing plate 113 and is connected to the telescopic device 120. In this embodiment, the heating component 130 is connected to the piston rod of the air cylinder, and the heating component 130 is driven by the piston rod of the air cylinder to move vertically up and down along the direction of the guide columns, so that hot-pressing heads 133 in the heating component 130 are aligned with to-be-sealed blind wells of a well plate. Specifically, when the air cylinder is pressurized, the heating component 130 moves downward; and when the air cylinder is depressurized, the heating component 130 moves upward.

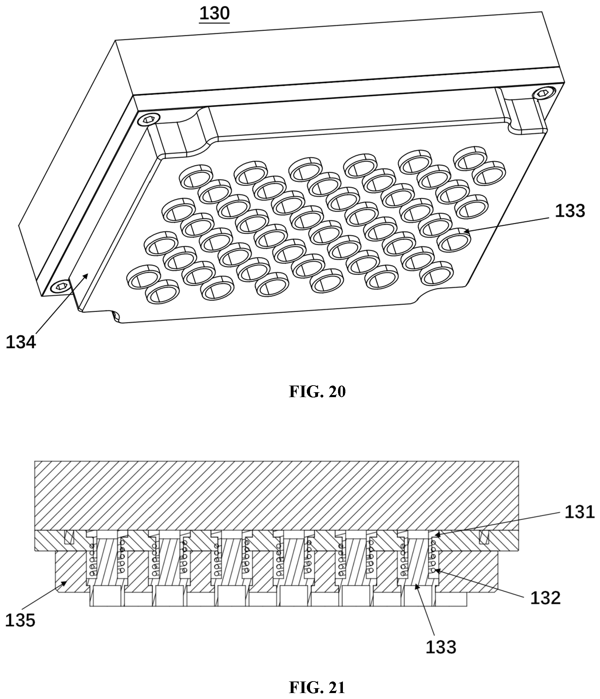

Optionally, referring to FIG. 20, the heating component 130 in this embodiment includes a hot-pressing head mounting plate 134 and 48 hot-pressing heads 133, each hot-pressing head 133 has an annular structure, and one end of each hot-pressing head 133 is connected to the hot-pressing head mounting plate.

Specifically, each hot-pressing head 133 has an annular structure, so as to prevent the liquid or solid in blind wells of a well plate from being directly heated. Specifically, the well plate and an upper heat-sealing film are fused into an integral body under a heating condition, and only an annular portion of each hot-pressing head 133 is in direct thermal contact with the heat-sealing film, and a reaction solution in the blind wells of the well plate is not in direct thermal contact with the hot-pressing head 133, and a heat-sealing duration is extremely short, such that effective sealing of the well plate is achieved, and a temperature of liquid in the blind wells of the well plate is maintained below 30 °C. This heat-sealing effect is suitable for sealing heat-sensitive solids or liquids.

Referring to FIG. 21, the hot-pressing head mounting plate 134 includes a hot-pressing head mounting plate body 135, 48 springs 132, and 48 bushings 131. One end of the hot-pressing head mounting plate body 135 is connected to the piston rod of the air cylinder, such that the heating component 130 is driven to move up and down. The hot-pressing head mounting plate body 135 functions to position and mount the hot-pressing heads 133, the bushings 131, and the springs 132, and a heating rod is mounted therein and is configured to heat positions of the hot-pressing heads 133 to a heat-sealing temperature.

Specifically, 48 cavities (not labeled in the drawings) are disposed in the hot-pressing head mounting plate body 135, each cavity is configured to accommodate one spring 132 and one bushing 131, each spring 132 is sleeved on an outer side of a corresponding bushing 131, one end of each bushing 131 is connected to the hot-pressing head mounting plate 134, and the other end of each bushing 131 is connected to one hot-pressing head 133.

It should be noted that the number of springs 132, hot-pressing heads 133, bushings 131, and cavities described in this embodiment, each being 48, are merely examples of this embodiment. In embodiments of the present invention, the number of the springs, the hot-pressing heads, and the bushings are determined according to actual requirements. Specifically, the arrangement can be set according to the number of blind wells of the well plate to be sealed. For example, an 8×6 arrangement of springs, hot-pressing heads, and bushings can be provided to match a 48-well plate having an 8×6 layout.

The arrangement of the bushings 131 functions to guide and lubricate vertical movement of the hot-pressing heads 133, so as to prevent movement of the hot-pressing heads 133 from deviating from a vertical direction. The bushings 131 can be brass bushings 131 or bushings 131 made of other materials.

The arrangement of the springs 132 functions to provide buffering and to ensure uniformity of heat sealing of a multi-well plate. Specifically, when the hot-pressing heads 133 move downward and contact a heat-sealing film, an upward thrust (a reaction force of a thrust of the telescopic device 120) applied by the heat-sealing film to the hot-pressing heads 133 is converted into an elastic force of the springs 132 (where the hot-pressing heads 133 compress the springs 132 upward, and the springs 132 contract). Such a structural design has the following two advantages. First, buffering is achieved. Direct downward movement of the hot-pressing heads 133 into contact with the heat-sealing film can cause a well plate and the heat-sealing film to be cut due to excessive thrust (since annular edges of the hot-pressing heads 133 are relatively sharp), and the springs 132 release force and provide buffering. Second, uniformity of heat sealing of the multi-well plate is ensured. During installation of a plurality of hot-pressing heads 133, annular bottom surfaces of the hot-pressing heads 133 are difficult to maintain on a same plane. When the springs 132 are not provided, during a heat-sealing process, annular bottom surfaces of some hot-pressing heads 133 cannot be in effective contact with the heat-sealing film. Preferably, after the springs 132 are provided, compression of the springs 132 applies a pushing force to the hot-pressing heads 133 that cannot effectively contact the heat-sealing film, so that all hot-pressing heads 133 are enabled to effectively contact the heat-sealing film, thereby achieving uniform heat sealing of the multi-well plate.

Optionally, in a natural state of the springs 132 (without force), a length of each spring 132 is slightly greater than a length of a corresponding bushing 131, and such a structure is more conducive to performance of the springs 132.

Optionally, a slide rail 114 is disposed on the above bottom fixing plate 113, and the slide rail 114 is configured to cooperate with a fixed mold sliding bottom plate 115 for use. That is, the fixed mold sliding bottom plate 115 is slidably connected to the bottom fixing plate 113 through the slide rail 114.

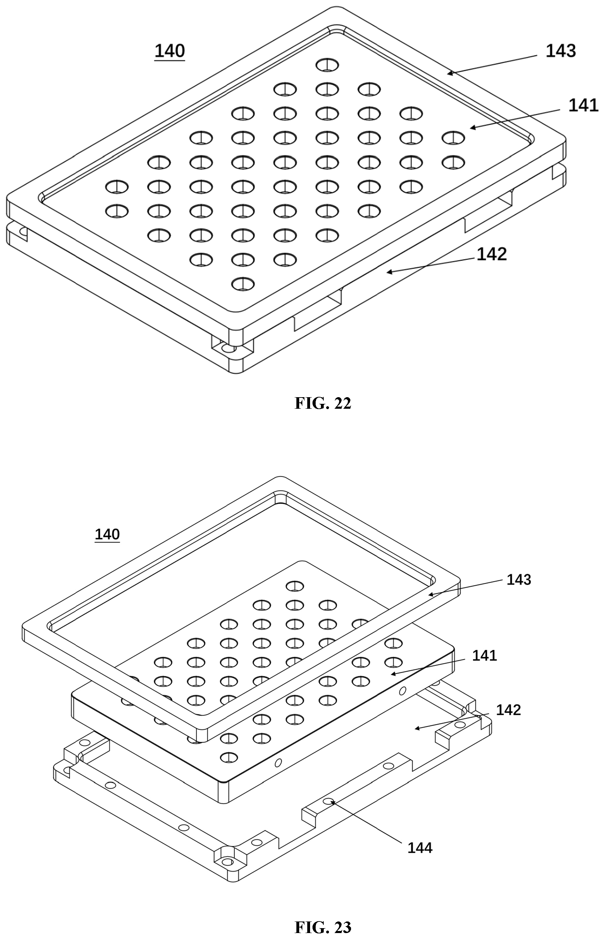

Optionally, referring to FIG. 22, the well plate heat-sealing device 100 further includes a transfer plate 140, and the transfer plate 140 is connected to the fixed mold sliding bottom plate 115. In the embodiments of the present invention, a snap connection is used. The transfer plate 140 and the heating component 130 selectively contact. Specifically, a side of the hot-pressing head mounting plate 134 relatively close to the hot-pressing heads 133 selectively contacts the transfer plate 140; when heat sealing of a well plate is not required, the transfer plate 140 and the heating component 130 are separated and are not in contact. When heat sealing of a well plate is required, the heating component 130 moves downward, and the hot-pressing heads 133 on the heating component 130 contact a layer of film configured for heat sealing of the well plate, a majority of an area of a side of the hot-pressing head mounting plate 134 relatively close to the hot-pressing heads 133 contacts with the film, and some portions of areas of the transfer plate 140 that are not to be heat-sealed. Meanwhile, when the thickness of the film is less than a distance between the hot-pressing head mounting plate 134 and the transfer plate 140, no contact occurs between the hot-pressing head mounting plate 134 and the film.

Specifically, referring to FIG. 23, the transfer plate 140 includes a well plate transfer plate 141, a lower mold plate 142, and a film pressing frame 143, the lower mold plate 142 is connected to the support, and the film pressing frame 143 selectively contacts the heating component; and the well plate transfer plate 141 is connected to the lower mold plate 142. In this embodiment, a connection manner between the well plate transfer plate 141 and the lower mold plate 142 can be that an accommodating cavity configured to place the well plate transfer plate 141 is arranged in the lower mold plate 142, and then the well plate transfer plate 141 is placed in the accommodating cavity.

Certainly, other connection manners between the well plate transfer plate 141 and the lower mold plate 142 can also be adopted. For example, a protruding structure is arranged on the lower mold plate 142, a recessed structure is arranged on a side of the well plate transfer plate 141 relatively close to the lower mold plate 142, and the protruding structure is snap-fitted with the recessed structure.

The film pressing frame 143 is connected to the lower mold plate 142, such that a heat-sealing film flatly covers above the multi-well plate, and the displacement of the heat-sealing film is prevented during a heat-sealing process. Specifically, mounting members are arranged along a periphery of one side of the lower mold plate 142, and the film pressing frame 143 is connected to the lower mold plate 142 through the mounting members. For example, in this embodiment, mounting holes 144 are arranged along a periphery of one side of the lower mold plate 142, for example, magnet holes, and the film pressing frame 143 is connected to the lower mold plate 142 through adsorption, for example, magnet adsorption; and therefore, during heat sealing, the film pressing frame 143 presses the heat-sealing film, such that the heat-sealing film flatly covers above the multi-well plate, and the displacement of the heat-sealing film is prevented during the heat-sealing process. The other side of the lower mold plate 142 is snap-fitted with the fixed mold sliding bottom plate 115.

Alternatively, protrusions can be arranged along a periphery of one side of the lower mold plate 142, grooves are arranged at corresponding positions of the film pressing frame 143, and snap-fitting is formed between the protrusions and the grooves.

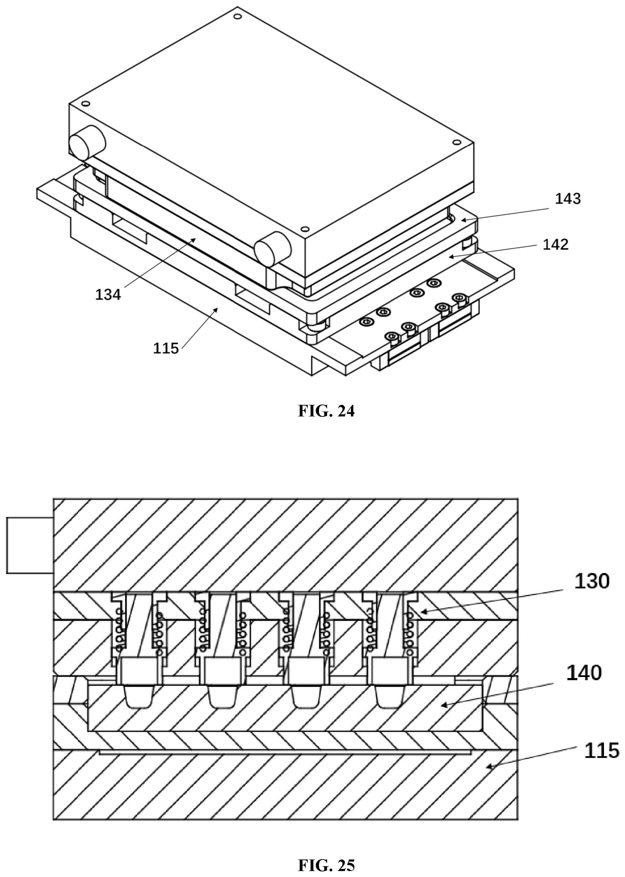

Optionally, referring to FIG. 24 and FIG. 25, the film pressing frame 143 is higher than the well plate transfer plate 141 by a certain distance, and such a structure is configured to limit the hot-pressing head 133 of the heating component 130. A working principle is as follows. A pressure applied by the hot-pressing head 133 to the heat-sealing film in a downward direction is determined by the limiting distance; when the hot-pressing head 133 stops moving downward, a pressure applied to the heat-sealing film is equal to an elastic force of an internal spring 132 in this case, and the elastic force of the spring 132 is determined by a compression length of the spring 132, and the compression length is exactly determined by the limiting distance; and therefore, the limiting distance is configured to adjust the pressure applied by the hot-pressing head 133. The limiting distance can be adjusted for thermoplastic materials with different thicknesses and different materials.

It can be seen that the well plate heat-sealing device 100 according to an embodiment of the present invention is suitable for a multi-well plate structure in which a plurality of blind wells of a well plate are densely distributed and an area available for heat sealing between the blind wells is small, so that the high efficiency and uniformity of heat sealing of the multi-well plate can be ensured.

In another aspect, an embodiment of the present invention further provides a high-throughput screening system (not shown), which includes the well plate heat-sealing device. In the high-throughput screening system, all devices other than the well plate heat-sealing device adopt the prior arts, and no special limitation is made in the present invention.

Specifically, a use process of the well plate heat-sealing device in this embodiment is as follows:
(1) setting a heat-sealing temperature to a specified temperature, wherein the heat-sealing temperature refers to a temperature of a heating component shown in FIG. 19, and heating is achieved through a heating rod inside the heating component;
(2) placing multi-well plate loaded with a liquid or a solid to the well plate transfer plate, for example, a commercially available multi-well plate made of a PP material is selected, wherein the well plate transfer plate should be matched with the multi-well plate, that is, a shape of a recessed portion of the well plate transfer plate is identical to a shape of a blind well of the multi-well plate;
(3) placing heat-sealing film above the multi-well plate;
(4) mounting the film pressing frame on the heat-sealing film, fixing the film pressing frame and the well plate transfer plate through magnet adsorption, and gently flattening the heat-sealing film, wherein in this step, a position of the heat-sealing film and a position of the well plate are fixed, and misalignment between the heat-sealing film and the well plate is prevented in a subsequent well plate sealing process;
(5) pushing the fixed mold sliding bottom plate to a limiting position along the slide rail, wherein in this step, the multi-well plate and the heat-sealing film are moved to a position directly below the hot-pressing head, namely the limiting position;
(6) pressing downward a telescopic device and maintaining a specified heating duration (hot-pressing duration), wherein in this step, the heating duration is adjusted according to an actual required heat-sealing duration; and
(7) after completion of heat sealing, moving upward the telescopic device, pulling out the fixed mold sliding bottom plate along the slide rail, removing the film pressing frame, and then taking out a sealed well plate from the well plate transfer plate.

It should be noted that the heat-sealing temperature and other parameters are adjusted according to a selected heat-sealing material. The selected heat-sealing material, in addition to a PP material, further includes substantially all thermoplastic plastics such as polyethylene (PE), polyvinyl chloride (PVC), polystyrene (PS), polyethylene terephthalate (PET), polyphenylene oxide (PPO), polymethyl methacrylate (PMMA), polycarbonate (PC), nylon (PA), fluorinated ethylene propylene (FEP), polychlorotrifluoroethylene (PCTFE), and a composite material (a PCTFE and PVC composite bilayer material).

The above-described contents are only specific embodiments of the present invention and are not intended to limit the present invention. For those skilled in the art, the present invention can be modified and varied. Any modification, equivalent replacement, improvement, or the like made without departing from the spirit and principle of the present invention shall fall within the protection scope of the present invention.

### INDUSTRIAL APPLICABILITY

In summary, embodiments of the present invention provide a well plate sealing process, a high-throughput screening method, a well plate heat-sealing device, and a high-throughput screening system, which solve problems that sealing of a single well with a small volume in an existing well plate is difficult and a temperature tolerance of an existing well plate sealing process is low. Thus, the problems in well plate-based high-throughput screening methods are solved, in which the reaction temperature and reaction solvent are limited, reactions cannot be performed at a temperature higher than a boiling point of a solvent, and heating and oscillation reaction conditions cannot be achieved.

## Claims

1. A well plate sealing process, comprising: covering a layer of film above blind wells of a well plate and then performing heat sealing, wherein a material forming the film is identical to a material of a portion of the well plate in contact with the film, and heat-sealing conditions comprise: a heat-sealing temperature of 5-65 °C higher than a melting point of the material of the film, and a heat-sealing duration of 0.3-4.5 s.

2. The well plate sealing process according to claim 1, wherein the heat-sealing temperature is 10-55 °C higher than the melting point of the material of the film, preferably 10-50 °C higher than the melting point of the material of the film; and
optionally, the heat-sealing duration is 0.5-4 s, more preferably 0.5-3 s, and further preferably 0.5-1 s or 1-3 s.

3. The well plate sealing process according to claim 1 or 2, wherein the material forming the film is a thermoplastic material;
preferably, the thermoplastic material is selected from any one of polyolefin materials, polyester materials, polyamide materials, and polyurethane materials, or a composite material formed from a combination of at least two of the polyolefin materials, polyester materials, polyamide materials, and polyurethane materials; and
preferably, the thermoplastic material is selected from any one of polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, and polychlorotrifluoroethylene, or a composite material formed from a combination of at least two of the polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, and polychlorotrifluoroethylene.

4. The well plate sealing process according to any one of claims 1-3, wherein a thickness of the film is 0.04-0.18 mm, preferably 0.04-0.15 mm, and more preferably 0.04-0.1 mm.

5. The well plate sealing process according to any one of claims 1-4, wherein the film is a PP film, a thickness of the PP film is 0.04-0.18 mm, preferably 0.04-0.15 mm, and more preferably 0.04-0.1 mm; the heat-sealing temperature is 170-215 °C, preferably 180-210 °C; and the heat-sealing duration is 0.5-4.5 s, more preferably 0.5-3 s, and further preferably 1-3 s.

6. The well plate sealing process according to any one of claims 1-4, wherein the film is an FEP film, a thickness of the FEP film is 0.04-0.18 mm, preferably 0.04-0.15 mm, and more preferably 0.04-0.1 mm; the heat-sealing temperature is 250-350 °C, preferably 280-300 °C; and the heat-sealing duration is 0.3-4.5 s, more preferably 0.5-3 s, and further preferably 0.5-1 s.

7. A high-throughput screening method, comprising the well plate sealing process according to any one of claims 1-6.

8. The high-throughput screening method according to claim 7, wherein the well plate comprises a blister well plate;
preferably, a cross-sectional shape of a blind well of the blister well plate is one selected from a circular shape, a quasi-circular shape, an elliptical shape, and a quasi-elliptical shape; more preferably a circular shape; and
preferably, an entire shape of the blind well of the blister well plate is one selected from a quasi-hemispherical shape and a quasi-semi-ellipsoidal shape, preferably a quasi-hemispherical shape.

9. The high-throughput screening method according to claim 8, further comprising: forming the blister well plate by performing a forming process on a thermoplastic material;
preferably, the high-throughput screening method comprises: forming the blister well plate by performing a thermoforming process on the thermoplastic material; and
preferably, the forming process comprises any one of a blow molding process, a vacuum forming process, and an injection molding process.

10. The high-throughput screening method according to claim 9, wherein the step of forming the blister well plate comprises: heating a thermoplastic material having a thickness of 0.15-0.8 mm to a temperature 5-30 °C lower than a melting point of the thermoplastic material, and then processing a thermoplastic material substrate into a mold shape by using a blow molding process or a vacuum forming process, so as to form the blister well plate;
preferably, the heating temperature is 5-25 °C lower than the melting point of the thermoplastic material, more preferably 5-20 °C lower than the melting point of the thermoplastic material; or
forming the blister well plate comprises: heating a thermoplastic material to a molten state, and then processing a thermoplastic material substrate into a mold shape by using an injection molding process, so as to form the blister well plate having a thickness of 0.15-0.8 mm; and
preferably, the thickness of the thermoplastic material is 0.2-0.6 mm.

11. The high-throughput screening method according to claim 9, wherein the step of forming the blister well plate comprises: heating a thermoplastic material having a thickness of 0.15-0.8 mm to a temperature 5-30 °C lower than a melting point of the thermoplastic material, maintaining the temperature for 50-100 s, then rapidly conveying the thermoplastic material to above a mold, and vacuum-forming the thermoplastic material in a vacuum environment to form the blister well plate;
preferably, the thickness of the thermoplastic material is 0.2-0.6 mm;
preferably, the heating temperature is 5-25 °C lower than the melting point of the thermoplastic material, more preferably 5-20 °C lower than the melting point of the thermoplastic material; and
preferably, the heating temperature is maintained for 70-90 s.

12. The high-throughput screening method according to claim 9, wherein the step of forming the blister well plate comprises: placing a thermoplastic material having a thickness of 0.15-0.8 mm above a mold, heating the thermoplastic material to a temperature 5-30 °C lower than a melting point of the thermoplastic material, and blow-molding the thermoplastic material under a pressure to form the blister well plate;
preferably, the thickness of the thermoplastic material is 0.2-0.6 mm; and
preferably, the heating temperature is 5-25 °C lower than the melting point of the thermoplastic material, and more preferably 5-20 °C lower than the melting point of the thermoplastic material.

13. The high-throughput screening method according to any one of claims 9-12, wherein the thermoplastic material is selected from any one of polyolefin materials, polyester materials, polyamide materials, and polyurethane materials, or a composite material formed from a combination of at least two of the polyolefin materials, polyester materials, polyamide materials, and polyurethane materials; and
preferably, the thermoplastic material is selected from any one of polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, and polychlorotrifluoroethylene, or a composite material formed from a combination of at least two of the polyethylene, polypropylene, polyvinyl chloride, polystyrene, polyethylene terephthalate, polybutylene terephthalate, polyarylate, polyisopropylene, polymethyl methacrylate, polycarbonate, nylon, fluorinated ethylene propylene, and polychlorotrifluoroethylene.

14. The high-throughput screening method according to any one of claims 9-13, wherein the thermoplastic material is a PP material, and the forming process comprises: heating the PP material to 130-165 °C, maintaining the temperature for 50-100 s, and vacuum-forming the PP material in a vacuum environment, wherein a thickness of the PP material is 0.15-0.8 mm;
preferably, the thickness of the PP material is 0.2-0.6 mm;
preferably, the heating temperature is 150-155 °C;
preferably, the heating temperature is maintained for 70-90 s; or
the forming process comprises: heating the PP material to 130-165 °C, and blow-molding the PP material under a pressure not less than 0.4 MPa, wherein a thickness of the PP material is 0.15-0.8 mm;
preferably, the thickness of the PP material is 0.2-0.6 mm; and
preferably, the heating temperature is 140-150 °C.

15. The high-throughput screening method according to any one of claims 9-13, wherein the thermoplastic material is an FEP material, and the forming process comprises: heating the FEP material to 220-260 °C, maintaining the temperature for 50-100 s, and vacuum-forming the FEP material in a vacuum environment, wherein a thickness of the FEP material is 0.15-0.8 mm;
preferably, the thickness of the FEP material is 0.2-0.6 mm;
preferably, the heating temperature is 240-250 °C;
preferably, the heating temperature is maintained for 70-90 s; or
the forming process comprises: heating the FEP material to 220-260 °C, and blow-molding the FEP material under a pressure not less than 0.4 MPa, wherein a thickness of the FEP material is 0.15-0.8 mm;
preferably, the thickness of the FEP material is 0.2-0.6 mm; and
preferably, the heating temperature is 240-250 °C.

16. The high-throughput screening method according to any one of claims 9-15, comprising: adding a reaction solution and/or a solid into a blind well of the blister well plate after forming the blister well plate, sealing according to the well plate sealing process, then performing heating and/or oscillation, and subsequently analyzing a reaction system.

17. The high-throughput screening method according to claim 16, wherein a sealing ring is formed at an opening of each blind well of the blister well plate in the sealing process;
preferably, a shape of the sealing ring is identical to a shape of the blind well of the blister well plate;
preferably, a space for forming the sealing ring is arranged between two adjacent blind wells; and
preferably, an inner contour of the sealing ring covers an outer contour of the blind well or is flush with an outer contour of the blind well.

18. The high-throughput screening method according to claim 16 or 17, wherein a device for performing heating and/or oscillation is provided with a boss, when the heating temperature is higher than a boiling point of a solvent, the boss contacts the sealed blister well plate to perform secondary reinforced sealing on the blind well of the blister well plate, and
a diameter of the boss is between an outer diameter and an inner diameter of the sealing ring at the opening of the blind well of the blister well plate.

19. A well plate heat-sealing device, comprising: a support, a transfer plate, and a heating component, wherein the transfer plate and the heating component are both connected to the support, and the transfer plate and the heating component selectively contact; and
the heating component comprises a hot-pressing head mounting plate and at least one hot-pressing head, each hot-pressing head has an annular structure, one end of the each hot-pressing head is connected to the hot-pressing head mounting plate, one side of the hot-pressing head mounting plate relatively close to the hot-pressing head selectively contacts the transfer plate, and the other side of the hot-pressing head mounting plate is connected to the support.

20. The well plate heat-sealing device according to claim 19, wherein the hot-pressing head mounting plate comprises a hot-pressing head mounting plate body, at least one spring, and at least one bushing, each spring and each bushing are both arranged in the hot-pressing head mounting plate body, one end of one bushing is connected to the hot-pressing head mounting plate body, the other end of the bushing is connected to one hot-pressing head, and one spring is sleeved outside the bushing.

21. The well plate heat-sealing device according to claim 20, wherein the hot-pressing head mounting plate body is provided with at least one cavity, and the one spring and the one bushing are both arranged in one cavity.

22. The well plate heat-sealing device according to claim 20 or 21, wherein the heating component further comprises a heating rod configured to heat the hot-pressing head, and the heating rod is arranged in the hot-pressing head mounting plate body.

23. The well plate heat-sealing device according to any one of claims 19-22, wherein the transfer plate comprises a well plate transfer plate, a lower mold plate, and a film pressing frame, the well plate transfer plate is connected to the lower mold plate, and the film pressing frame is connected to the lower mold plate, so as to enable a heat-sealing film to flatly cover above a multi-well plate and to ensure that the heat-sealing film does not deviate during a heat-sealing process; and the lower mold plate is connected to the support, and the film pressing frame selectively contacts the hot-pressing head mounting plate.

24. The well plate heat-sealing device according to claim 23, wherein the lower mold plate is provided with an accommodating cavity configured to place the well plate transfer plate.

25. The well plate heat-sealing device according to claim 23 or 24, wherein mounting members are arranged along a periphery of the lower mold plate, and the film pressing frame is connected to the lower mold plate through the mounting members, so as to enable a heat-sealing film to flatly cover above a multi-well plate and to ensure that the heat-sealing film does not deviate during a heat-sealing process.

26. The well plate heat-sealing device according to any one of claims 19-25, wherein the support comprises a telescopic device, and the telescopic device is connected to the hot-pressing head mounting plate, so as to push the heating component and the transfer plate to selectively contact.

27. The well plate heat-sealing device according to any one of claims 19-26, wherein the support comprises a fixed mold sliding bottom plate and a bottom fixing plate, the fixed mold sliding bottom plate is connected to the transfer plate, a slide rail is arranged on the bottom fixing plate, and the fixed mold sliding bottom plate is slidably connected to the bottom fixing plate through the slide rail.

28. A high-throughput screening system, comprising the well plate heat-sealing device according to any one of claims 19-27.
